# EUROPEAN PATENT SPECIFICATION

(11) **EP 3 447 379 B1**
(45) Date of publication and mention of the grant of the patent: **26.01.2022**
(21) Application number: 17188016.4
(22) Date of filing: 25.08.2017
(51) Int. Cl.: F23N 3/00, F02C 9/18, F02C 9/22, F23N 5/02

(54) **METHOD FOR OPERATING A GAS TURBINE PLANT AND GAS TURBINE PLANT**
VERFAHREN ZUM BETRIEB EINER GASTURBINENANLAGE UND GASTURBINENANLAGE
PROCÉDÉ DE FONCTIONNEMENT D'UNE INSTALLATION DE TURBINE À GAZ ET INSTALLATION DE TURBINE À GAZ

(43) Date of publication of application: 27.02.2019
(73) Proprietor: Ansaldo Energia IP UK Limited, London W1G 9DQ (GB)
(72) Inventor: WIECK, Jakob, 5400 BADEN (CH); FERREIRA-PROVIDAKIS, Theodoros, 5430 WETTINGEN (CH); JAKOBY, Ralf, 5243 MÜLLIGEN (CH); THERKORN, Dirk, 79761 WALDSHUT (DE)
(74) Representative: Andreotti, Erika

(56) References cited:
- EP-A1- 3 199 781
- EP-A2- 2 600 063
- WO-A1-2014/095094

## Description

### TECHNICAL FIELD

The present invention relates to a method for operating a gas turbine plant and to a gas turbine plant. In particular the gas turbine plant of the present invention is an electric power production plant.

### BACKGROUND

As is known, when the power demand from the network is low - for example during night hours - the gas turbine plants for the production of electrical energy are operated at a minimum environmental load. At said load the gas turbine plant produces pollutant emissions (NOx and CO) under the law limits.

However, it is a requirement for all plant owners to reduce further said minimum environmental load and, at the same time, maintain the pollutant emissions under the law limits. Reducing further the load, in fact, would often lead to an increase of the CO emissions above the law limits. Examples of methods for operating gas turbine plants focused on the reduction of the load and gas turbine plants are disclosed in documents EP2600063, which covers the features specified in the preamble of claims 1 and 7 respectively, and

### SUMMARY

The object of the present invention is therefore to provide a method for operating a gas turbine plant, which enables to reduce further the load of the gas turbine plant while maintaining the pollutant emissions under the law limits.

In particular, it is an object of the present invention to provide a method for operating a gas turbine plant as claimed in claim 1.

In this way the control of the combustor assembly is more efficient. In particular, controlling the combustor assembly on the basis of the calculated average value allows to obtain a more precise control of the temperature in the combustor assembly in order to avoid flame instabilities and excessive pollutant emissions.

According to the invention, the average is calculated considering only the values of the temperature of the fluid streams which are heated by corresponding switched-on operating burners. This solution allows to obtain a very precise and reliable control of the temperature in the combustor assembly.

According to a preferred embodiment of the present invention, controlling the combustor assembly comprises controlling the operation of each of the switched-on operating burners and/or controlling the amount of oxidizer supplied to the combustor assembly.

According to a preferred embodiment of the present invention, controlling the combustor assembly comprises calculating an error between a current value of the temperature at the inlet of the gas turbine and a pre-set desired value of temperature at the inlet and controlling the combustor assembly on the basis of said error; wherein the current value of the temperature at the inlet is calculated on the basis of the average value.

As the temperature at the inlet of the gas turbine or in the combustor cannot be reliably detected, unless incurring in very high costs, the temperature at the inlet of the gas turbine can be calculated on the basis of data which are easier to be measured and more reliable.

According to a preferred embodiment of the present invention, the plurality of temperature sensors are arranged at the outlet of the gas turbine. In this way the temperature can be measured in a very simple way without incurring in high costs. According to a preferred embodiment of the present invention, controlling the amount of oxidizer supplied to the combustor assembly comprises at least one of the following steps:
- regulating the position of a plurality of inlet guide vanes arranged at the inlet of the compressor;
- regulating the opening of at least one blow-off valve arranged along an extraction line which draws air from the compressor and supplies it to the gas turbine;
- opening a by-pass line connecting the compressor to any element of the plant arranged downstream of the combustor assembly;
- regulating the opening of at least one recirculation valve arranged along a recirculating line connecting an intermediate stage of the compressor to the inlet of the compressor.

In this way the amount of the fuel oxidizer can be regulated in more than one way so as to reach the desired level of oxidizer in the combustor in a more flexible and rapid way.

In particular, thanks to the ways above listed the air coming from the compressor which is supplied to the combustor can be opportunely reduced in a simple and rapid way.

It is another object of the present invention to provide a gas turbine plant which can operate at loads lower than the ones of the known gas turbine plants while maintaining the pollutants emissions under the law limits.

According to such object the present invention relates to a gas turbine plant according to claim 7.

### BRIEF DESCRIPTION OF THE DRAWINGS

The present invention will now be described with reference to the accompanying drawings, which illustrate some non-limitative embodiment, in which:
- figure 1 is a schematic representation of a gas turbine plant according to a first embodiment of the present invention;
- figure 2 is a block diagram schematically representing on detail of the plant of the gas turbine plant of figure 1;
- figure 3 is a schematic representation of a gas turbine plant according to a second embodiment of the present invention.

### DETAILED DESCRIPTION OF EXEMPLARY EMBODIMENTS

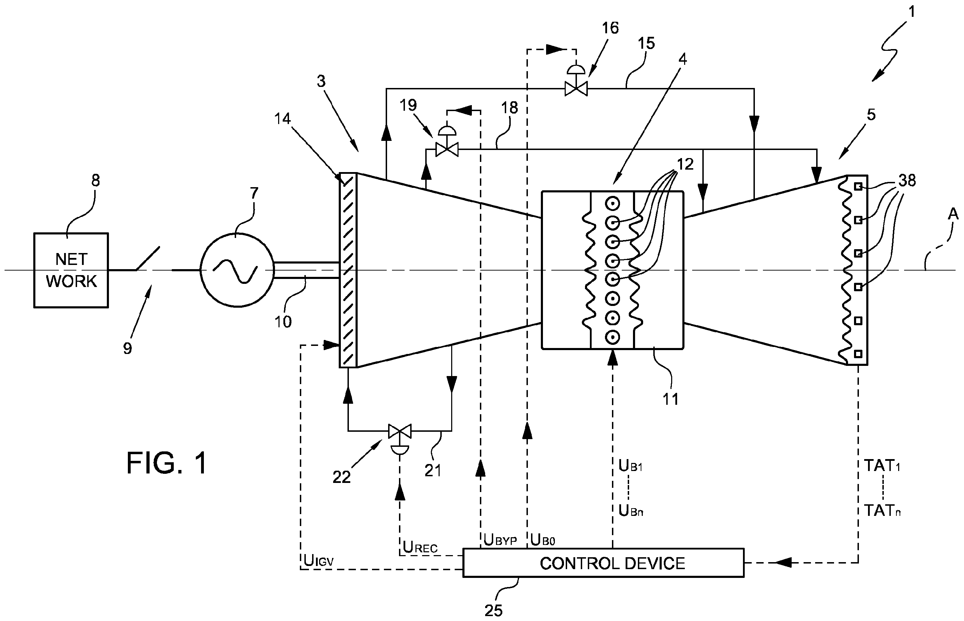

In figure 1 reference numeral 1 indicates a gas turbine plant for electrical energy production which extend along a longitudinal axis A and comprises a compressor 3, a combustor assembly 4, a turbine 5 and a generator 7, which transforms the mechanical power supplied by turbine 5 into electrical power to be supplied to an electrical network 8, connected to the generator 7 via a switch 9.

A variant not shown provides for plant 1 to be of the combined cycle type and including, in addition to the gas turbine 5, also a steam turbine.

The gas turbine 5 extends along the longitudinal axis A and is provided with a shaft 10 (also extending along axis A) to which compressor 3 and generator 7 are also connected. Combustor assembly 4 comprises at least one combustor 11 provided with a plurality of burners 12 (only some of them are schematically illustrated in figure 1) which are arranged substantially circumferentially about the longitudinal axis A and are supplied with at least one fuel independently one from the other.

Combustor assembly 4, and in particular the combustor 11, is supplied also with at least one oxidizer. In the non-limitative example here disclosed and illustrated the oxidizer is compressed air coming from the compressor 3.

Compressor 3 comprises a plurality of variable inlet guide vanes 14 (normally indicated with the expression VIGV and schematically represented in the attached drawings) which are arranged at the inlet of the compressor 3.

The plant 1 comprises furthermore at least one extraction line 15 provided with at least one blow-off valve 16 and configured to draw air from the compressor 3 and supply it to the gas turbine 5, at least one by-pass line 18 provided with at least one by-pass valve 19 and configured to draw air from the compressor 3 and supply it downstream of the combustor 4 (in the non-limiting example here disclosed and illustrated the by-pass line 18 discharges into two points of the gas turbine 5), and a recirculation line 21 provided with at least one recirculation valve 22 and configured to connect an intermediate stage of the compressor 3 to the inlet of the compressor 3.

The plant 1 comprises also a control device 25 which is configured to control the combustor assembly 4.

In particular, the control device 25 is configured to control the operation of each burner 12 of the combustor 11 and to regulate the amount of oxidizer supplied to the combustor 11. As will be detailed more in the following, the control device 25 controls the combustor assembly 4 on the basis of the actual load of the gas turbine 5 and on the basis of other parameters of the plant 1, among which the temperature at the inlet TIT of the gas turbine 5 has an important role.

In more detail, the control device 25 is configured to switch off at least one burner 12 of the plurality of burners 12 when the turbine 5 operates in a low relative load range.

The low relative load range is the load range comprising load values less or equal to the Minimum Environmental Load (MEL).

Switching off at least one of the burner 12 when the turbine 5 operates in said low relative load range allows to obtain a further reduction of the load operated by the gas turbine 5 without exceeding environmental limits as described in detail in the following. In other words, switching off at least one of the burner 12 when the turbine 5 operates in said low relative load range allows to obtain a reduction of the minimum environmental load without exceeding environmental limits.

Preferably the switching-off of the burners 12 is performed according to a predefined burner switching schedule. For example, the burner switching schedule can provide for a gradual switching-off of the burners 12 or alternatively for a sudden switching-off or can provide for a specific pattern of the switched-off burners or, alternatively, for a switching-off of adjacent burners, etc.

However, in order to still meet environmental limits for nitrous oxides (NOx) and carbon monoxide (CO) emissions the control device 25 should also control the operation of the operating burners 12 which are still switched-on and regulate the amount of oxidizer supplied to the combustor assembly 4.

Preferably the control device 25 is configured to control the operation of the operating burners 12 which are still switched-on and to regulate the amount of oxidizer on the basis of at least the temperature at the inlet TIT of the gas turbine 5.

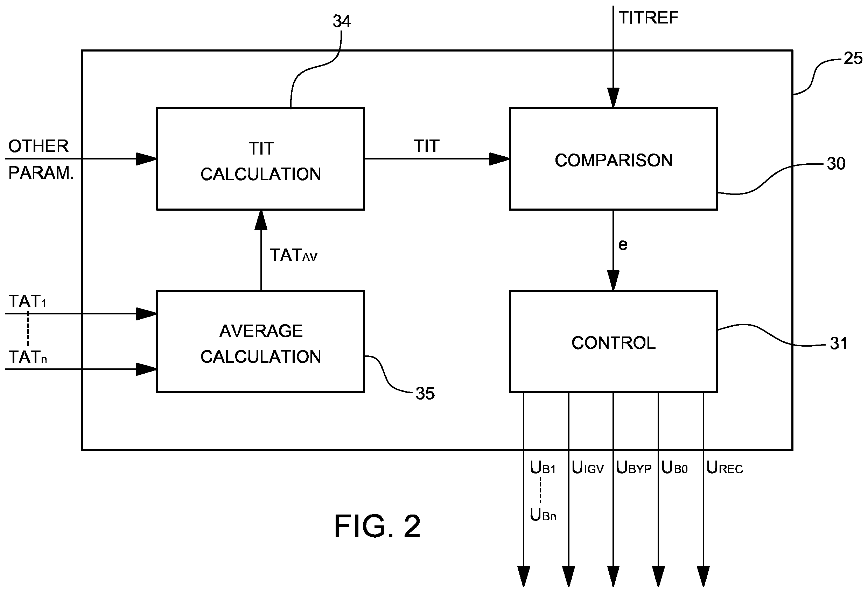

With reference to figure 2, in particular, the control device 25 comprises a comparison module 30 configured to compare a current value of the temperature at the inlet TIT with a pre-set desired value of temperature at the inlet TITREF so as to define an error e (e=TITREF-TIT).

On the basis of said error e a control module 31 calculate one or more control signals (UB1... UBn, UIGV, UBO, UBYP, UREC) in order to control the combustor assembly 4.

In particular, the control module 31 is configured to calculate fuel control signals UB1... UBn to be sent to each of the operating burners 12 which are still switched on and/or to calculate a control signal UIGV to be sent to the VIGV 14 for regulating the position of the plurality of variable inlet guide vanes 14 arranged at the inlet of the compressor 3, and/or to calculate a control signal UBO to be sent to the blow off valve 16 for regulating the amount of compressed air drawn from the compressor 3 and supplied to the gas turbine 5 and/or to calculate a control signal UBYP to be sent to the by-pass valve 19 for controlling the opening of the by-pass line 18, and/or to calculate a control signal UREC to be sent to the recirculation valve 22 for regulating the amount of compressed air to be recirculated from a compressor intermediate stage to the inlet of the compressor 3. Preferably, temperature at the inlet TIT of the gas turbine 5 is detected indirectly.

The conditions at the inlet of the gas turbine 5, in fact, do not allow an efficient and cost effective temperature measurement. Local temperatures at the inlet of the gas turbine 5 are too high and can lead to high failure rates of the detection.

Preferably, the control device 25 comprises a TIT calculation module 34 configured to calculate the temperature at the inlet TIT of the gas turbine 5 at least on the basis of at least one temperature detected at the outlet TAT of the gas turbine 5. Further parameters (schematically represented with the label OTHER PARAM.) can be used for calculating the temperature at the inlet TIT of the gas turbine 5, such as, for example, turbine outlet temperature delta, turbine outlet temperature spread, compressor parameters, burner switching schedule, fuel mass flows or turbine pressure ratio.

Preferably, the TIT calculation module 34 calculate the temperature at the inlet TIT of the gas turbine 5 at least on the basis of an average temperature TATAV detected at the outlet of the gas turbine 5.

In particular, the control device 25 comprises an average calculation module 35 which is configured to calculate the average temperature TATAV on the basis of the temperature values detected by a plurality of sensor 38 arranged circumferentially about the longitudinal axis A at the outlet of the gas turbine 5.

More preferably, the average calculation module 35 is configured to calculate the average temperature TATAV on the basis of the value detected only by the temperature sensors 38 positioned in the hot zones substantially heated by the operating burners 12 which are switched-on.

In other words, the fluid streams heated by the operating burners 12 exit from the combustor 11 and flow into the gas turbine 5. In the gas turbine 5 said fluid streams do not mix completely together. In this way, when only some of the burners are switched-on, in the gas turbine 5 "hot" and "cold" zones are present.

Hot and cold zones can be identified by the exhaust temperature measurements performed by the plurality of sensors 38. The exhaust temperature sensors 38 are circumferentially and radially distributed at the outlet of the gas turbine.

In other words, the average temperature TATAV is calculated only considering data detected by sensors 38 which detect temperatures greater than a threshold (identifying "hot zones").

In this way the average temperature TATAV data is more reliable and the control device 25 is more reliable and efficient too.

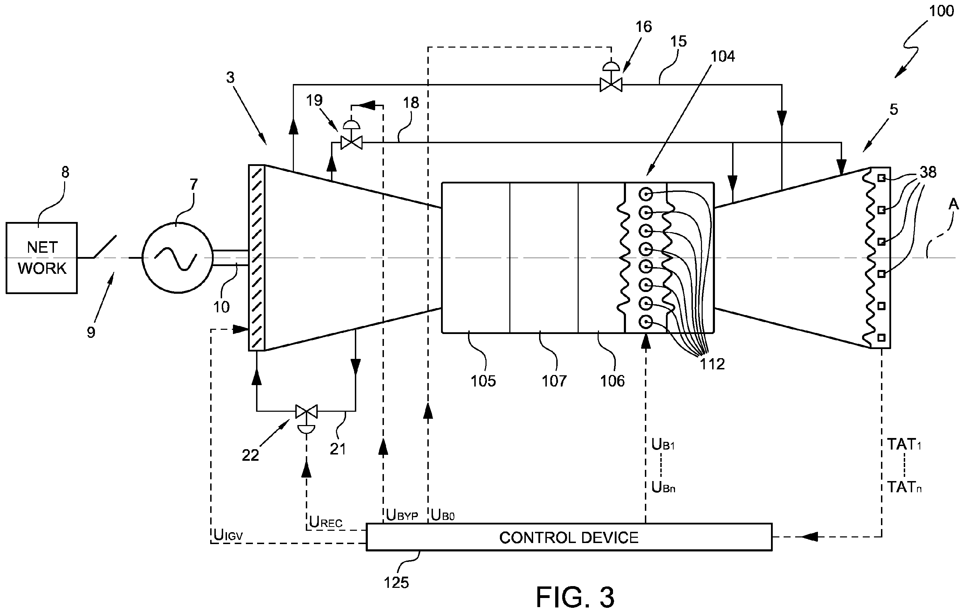

Figure 3 shows a gas turbine plant 100 which differs from plant 1 mainly for the presence of a combustor assembly 104 wherein a sequential combustion is provided. In figure 3 the same reference numbers used in figure 1 are used to indicate similar or identical elements.

In particular, the combustor assembly 104 comprises a first combustor 105 and a second combustor 106 which is arranged downstream of the first combustor 105. The second combustor 106 is coupled to the gas turbine 5 described above. Between the first combustor 105 and the second combustor 106 an intermediate element 107 can be arranged, such as a mixer or a high pressure turbine.

Fuel can be introduced into the first combustor 105 and into the second combustor 106. In particular, the second combustor 106 comprises a plurality of burners 112.

A control device 125 controls the combustor assembly 104 analogously to what done by the control device 25 except for the fact that the burners which are switched off and controlled by the control device 125 are the burners 112 of the second combustor 106 which is coupled to the gas turbine 5.

In more detail, the control device 125 is configured to switch off at least one burner 112 of the plurality of burners 112 when the turbine 5 operates in a low relative load range.

In order to still meet environmental limits for nitrous oxides (NOx) and carbon monoxide (CO) emissions the control device 125 should also control the operation of the operating burners 112 which are still switched-on and regulate the amount of oxidizer supplied to the combustor assembly 104.

Finally, it is clear that modifications and variants can be made to the method and to the plant described herein without departing from the scope of the present invention, as defined in the appended claims.

## Claims

1. Method for operating a gas turbine plant (1; 100) extending along a longitudinal axis (A) and comprising a compressor (3), a combustor assembly (4; 104) and at least one gas turbine (5); the combustor assembly (4;104) comprising at least one combustor (11; 106) coupled to the gas turbine (5) and provided with a plurality of burners (12; 112) circumferentially arranged about the longitudinal axis (A); the gas turbine (5) comprising a plurality of temperature sensors (38) circumferentially arranged about the longitudinal axis (A);
the method comprising:
• operating the gas turbine (5) in a low relative load range;
• when the gas turbine (5) operates in said low relative load range switching off at least one burner of the plurality of burners (12; 112) in order to have a minimum number of switched-on operating burners;
• calculating an average value (TATAV) on the basis of the temperature values measured by the plurality of sensors (38);
• controlling the combustor assembly (4; 104) on the basis of at least the calculated average value (TATAV).
the method being **characterized by** the fact that calculating the average value (TATAV) comprises calculating the average only considering the values detected by temperature sensors (38) which are positioned so as to detect the temperature of the fluid streams which have been substantially heated by the switched-on operating burners (12; 112).

2. Method according to claim 1, wherein controlling the combustor assembly (4; 104) comprises controlling the operation of each of the switched-on operating burners (12; 112) and/or controlling the amount of oxidizer supplied to the combustor assembly (4; 104).

3. Method according to claim 2, wherein controlling the combustor assembly (4; 104) comprises calculating an error (e) between a current value of the temperature at the inlet (TIT) of the gas turbine (5) and a pre-set desired value of temperature at the inlet (TITREF) and controlling the combustor assembly (4; 104) on the basis of said error (e).

4. Method according to claim 3, wherein controlling the combustor assembly (4; 104) comprises calculating the current value of the temperature at the inlet (TIT) on the basis of the average value (TATAV).

5. Method according to anyone of the foregoing claims, wherein the plurality of temperature sensors (38) are arranged at the outlet of the gas turbine (5).

6. Method according to anyone of claims 2-5, wherein controlling the amount of oxidizer supplied to the combustor assembly (4; 104) comprises at least one of the following steps:
• regulating the position of a plurality of inlet guide vanes (14) arranged at the inlet of the compressor (3);
• regulating the opening of at least one blow-off valve (16) arranged along an extraction line (15) which draws air from the compressor (3) and supplies it to the gas turbine (5);
• opening a by-pass line (18) connecting the compressor (3) to any element of the plant (1; 100) arranged downstream of the combustor assembly (4;100) ;
• regulating the opening of at least one recirculation valve (22) arranged along a recirculating line (21) connecting an intermediate stage of the compressor (3) to the inlet of the compressor (3).

7. Gas turbine plant (1; 100) extending along a longitudinal axis (A) and comprising a compressor (3), a combustor assembly (4; 104) and at least one gas turbine (5) and a control device (25; 125); the combustor assembly (4;104) comprising at least one combustor (11; 106) coupled to the gas turbine (5) and provided with a plurality of burners (12; 112) circumferentially arranged about the longitudinal axis (A); the gas turbine (5) comprising a plurality of temperature sensors (38) circumferentially arranged about the longitudinal axis (A); the control device (25; 125) being configured to:
switch-off at least one burner of the plurality of burners (12; 112) in order to have a minimum number of switched-on operating burners when the gas turbine (5) operates at the minimum environmental load;
calculate (35) an average value (TATAV) on the basis of the temperature values measured by the plurality of sensors (38);
control the combustor assembly (4; 104) on the basis of at least the calculated average value (TATAV);
the plant being **characterized by** the fact that the control device (25; 125) is configured to calculate the average value (TATAV) by calculating an average only considering the values detected by temperature sensors (38) which are positioned so as to detect the temperature of the fluid streams which have been substantially heated by the switched-on operating burners (12; 112).

8. Plant according to claim 7, wherein the control device (25; 125) is configured to control the operation of each of the switched-on operating burners (12; 112) and/or to control the amount of oxidizer supplied to the combustor assembly (4; 104).

9. Plant according to claim 8, wherein the control device (25; 125) is configured to calculate (30) an error (e) between a current value of the temperature at the inlet (TIT) of the gas turbine (5) and a pre-set desired value of temperature at the inlet (TITREF) and controlling the combustor assembly (4; 104) on the basis of said error (e) .

10. Plant according to claim 9, wherein the control device (25; 125) is configured to calculate (34) the current value of the temperature at the inlet (TIT) on the basis of the average value (TATAV).

11. Plant according to anyone of the claims 7-10, wherein the plurality of temperature sensors (38) are arranged at the outlet of the gas turbine (5).

12. Plant according to anyone of claims 8-11, wherein the control device (25; 125) is configured to perform at least one of the following steps:
• calculate a first control signal (UIGV) for regulating the position of a plurality of inlet guide vanes (14) arranged at the inlet of the compressor (3);
• calculate a second control signal (UBO) for regulating the opening of at least one blow-off valve (16) arranged along an extraction line (15) which draws air from the compressor (3) and supplies it to the gas turbine (5);
• calculate a third control signal (UBYP) for controlling the opening of a by-pass line (18) connecting the compressor (3) to any element of the plant (1; 100) arranged downstream of the combustor assembly (4;100);
• calculate a fourth control signal (UREC) for regulating the opening of at least one recirculation valve (22) arranged along a recirculating line (21) connecting an intermediate stage of the compressor (3) to the inlet of the compressor (3).

13. Plant according to anyone of claims 7-12, wherein the combustor assembly (104) is a sequential combustor assembly and comprises a first combustor (105) and a second combustor (106) arranged downstream the first combustor (105); the second combustor (106) comprising the plurality of burners (112) and being coupled to the gas turbine (5).

## Patentansprüche

1. Verfahren zum Betreiben einer Gasturbinenanlage (1; 100), die sich entlang einer Längsachse (A) erstreckt und einen Verdichter (3), eine Brennkammeranordnung (4; 104) und wenigstens eine Gasturbine (5) umfasst; wobei die Brennkammeranordnung (4; 104) wenigstens eine Brennkammer (11; 106) umfasst, die mit der Gasturbine (5) gekoppelt ist und mit mehreren Brennern (12; 112) versehen ist, die in Umfangsrichtung um die Längsachse (A) angeordnet sind; wobei die Gasturbine (5) mehrere Temperatursensoren (38) umfasst, die in Umfangsrichtung um die Längsachse (A) angeordnet sind;
wobei das Verfahren umfasst:
- Betreiben der Gasturbine (5) in einem niedrigen relativen Lastbereich;
- wenn die Gasturbine (5) in dem niedrigen relativen Lastbereich arbeitet, Abschalten wenigstens eines Brenners der mehreren Brenner (12; 112), um eine minimale Anzahl von eingeschalteten arbeitenden Brennern zu erhalten;
- Berechnen eines Durchschnittswertes (TATAV) auf der Grundlage der von den mehreren Sensoren (38) gemessenen Temperaturwerte;
- Steuern der Brennkammeranordnung (4; 104) auf der Grundlage wenigstens des berechneten Durchschnittswertes (TATAV), wobei das Verfahren **dadurch gekennzeichnet ist, dass** das Berechnen des Durchschnittswertes (TATAV) das Berechnen des Durchschnitts nur unter Berücksichtigung der Werte umfasst, die von Temperatursensoren (38) erfasst werden, die so angeordnet sind, dass sie die Temperatur der Fluidströme erfassen, die durch die eingeschalteten arbeitenden Brenner (12; 112) wesentlich erhitzt worden sind.

2. Verfahren nach Anspruch 1, wobei das Steuern der Brennkammeranordnung (4; 104) das Steuern des Betriebs jedes der eingeschalteten arbeitenden Brenner (12; 112) und/oder das Steuern der der Brennkammeranordnung (4; 104) zugeführten Oxidationsmittelmenge umfasst.

3. Verfahren nach Anspruch 2, wobei das Steuern der Brennkammeranordnung (4; 104) das Berechnen eines Fehlers (e) zwischen einem Istwert der Temperatur am Einlass (TIT) der Gasturbine (5) und einem voreingestellten Sollwert der Temperatur am Einlass (TITREF) und das Steuern der Brennkammeranordnung (4; 104) auf der Grundlage dieses Fehlers (e) umfasst.

4. Verfahren nach Anspruch 3, wobei das Steuern der Brennkammeranordnung (4; 104) das Berechnen des Istwertes der Temperatur am Einlass (TIT) auf der Grundlage des Durchschnittswertes (TATAV) umfasst.

5. Verfahren nach einem der vorangehenden Ansprüche, wobei die mehreren Temperatursensoren (38) am Auslass der Gasturbine (5) angeordnet sind.

6. Verfahren nach einem der Ansprüche 2 bis 5, wobei das Steuern der der Brennkammeranordnung (4; 104) zugeführten Oxidationsmittelmenge wenigstens einen der folgenden Schritte umfasst:
- Regulierung der Stellung mehrerer Einlassleitschaufeln (14), die am Einlass des Verdichters (3) angeordnet sind;
- Regulieren der Öffnung wenigstens eines Abblasventils (16), das entlang einer Entnahmeleitung (15) angeordnet ist, die Luft aus dem Verdichter (3) abzieht und der Gasturbine (5) zuführt;
- Öffnen einer Bypass-Leitung (18), die den Verdichter (3) mit einem beliebigen Element der Anlage (1; 100) verbindet, das stromabwärts der Brennkammeranordnung (4; 100) angeordnet ist;
- Regulieren der Öffnung wenigstens eines Rezirkulationsventils (22), das entlang einer Rezirkulationsleitung (21) angeordnet ist, die eine Zwischenstufe des Verdichters (3) mit dem Einlass des Verdichters (3) verbindet.

7. Gasturbinenanlage (1; 100), die sich entlang einer Längsachse (A) erstreckt und einen Verdichter (3), eine Brennkammeranordnung (4; 104) und wenigstens eine Gasturbine (5), sowie eine Steuervorrichtung (25; 125) umfasst; wobei die Brennkammeranordnung (4; 104) wenigstens eine Brennkammer (11; 106) umfasst, die mit der Gasturbine (5) gekoppelt und mit mehreren Brennern (12; 112) versehen ist, die in Umfangsrichtung um die Längsachse (A) angeordnet sind; wobei die Gasturbine (5) mehrere Temperatursensoren (38) umfasst, die in Umfangsrichtung um die Längsachse (A) angeordnet sind; wobei die Steuervorrichtung (25; 125) dazu konfiguriert ist:
wenigstens einen Brenner der mehreren Brenner (12; 112) abzuschalten, um eine minimale Anzahl von eingeschalteten arbeitenden Brennern zu erhalten, wenn die Gasturbine (5) mit der minimalen Umweltlast arbeitet;
einen Durchschnittswert (TATAV) auf der Grundlage der von den mehreren Sensoren (38) gemessenen Temperaturwerte zu berechnen (35);
die Brennerkammeranordnung (4; 104) auf der Grundlage wenigstens des berechneten Durchschnittswertes (TATAV) zu steuern;
wobei die Anlage **dadurch gekennzeichnet ist, dass** die Steuervorrichtung (25; 125) dazu konfiguriert ist, den Durchschnittswert (TATAV) zu berechnen, indem ein Durchschnitt nur unter Berücksichtigung der Werte berechnet wird, die von Temperatursensoren (38) erfasst werden, die so angeordnet sind, dass sie die Temperatur der Fluidströme erfassen, die durch die eingeschalteten arbeitenden Brenner (12; 112) wesentlich erhitzt worden sind.

8. Anlage nach Anspruch 7, wobei die Steuervorrichtung (25; 125) dazu konfiguriert ist, den Betrieb jedes der eingeschalteten arbeitenden Brenner (12; 112) zu steuern und/oder die der Brennerkammeranordnung (4; 104) zugeführte Oxidationsmittelmenge zu steuern.

9. Anlage nach Anspruch 8, wobei die Steuervorrichtung (25; 125) dazu konfiguriert ist, einen Fehler (e) zwischen einem Istwert der Temperatur am Einlass (TIT) der Gasturbine (5) und einem voreingestellten Sollwert der Temperatur am Einlass (TITREF) zu berechnen (30), und die Brennerkammeranordnung (4; 104) auf der Grundlage des Fehlers (e) zu steuern.

10. Anlage nach Anspruch 9, wobei die Steuervorrichtung (25; 125) dazu konfiguriert ist, den Istwert der Temperatur am Einlass (TIT) auf der Grundlage des Durchschnittswertes (TATAV) zu berechnen (34).

11. Anlage nach einem der Ansprüche 7 bis 10, wobei die mehreren Temperatursensoren (38) am Auslass der Gasturbine (5) angeordnet sind.

12. Anlage nach einem der Ansprüche 8 bis 11, wobei die Steuervorrichtung (25; 125) dazu konfiguriert ist, wenigstens einen der folgenden Schritte auszuführen:
- Berechnen eines ersten Steuersignals (UIGV) zum Regulieren der Stellung mehrerer am Einlass des Verdichters (3) angeordneter Einlassleitschaufeln (14);
- Berechnen eines zweiten Steuersignals (UBO) zum Regulieren der Öffnung wenigstens eines Abblasventils (16), das entlang einer Entnahmeleitung (15) angeordnet ist, die Luft aus dem Verdichter (3) abzieht und der Gasturbine (5) zuführt;
- Berechnen eines dritten Steuersignals (UBYP) zum Steuern der Öffnung einer Bypass-Leitung (18), die den Verdichter (3) mit einem beliebigen Element der Anlage (1; 100) verbindet, das stromabwärts der Brennkammeranordnung (4; 100) angeordnet ist;
- Berechnen eines vierten Steuersignals (UREC) zum Regulieren der Öffnung wenigstens eines Rezirkulationsventils (22), das entlang einer Rezirkulationsleitung (21) angeordnet ist, die eine Zwischenstufe des Verdichters (3) mit dem Einlass des Verdichters (3) verbindet.

13. Anlage nach einem der Ansprüche 7 bis 12, wobei die Brennerkammeranordnung (104) eine sequentielle Brennerkammeranordnung ist und eine erste Brennkammer (105) und eine stromabwärts des ersten Brenners (105) angeordnete zweite Brennkammer (106) umfasst; wobei die zweite Brennkammer (106) die mehreren Brenner (112) umfasst und mit der Gasturbine (5) gekoppelt ist.

## Revendications

1. Procédé de fonctionnement d'une installation de turbine à gaz (1 ; 100) s'étendant le long d'un axe longitudinal (A) et comprenant un compresseur (3), un ensemble de chambres de combustion (4 ; 104) et au moins une turbine à gaz (5) ; l'ensemble de chambres de combustion (4; 104) comprenant au moins une chambre de combustion (11 ; 106) couplée à la turbine à gaz (5) et pourvue d'une pluralité de brûleurs (12 ; 112) disposés circonférentiellement autour de l'axe longitudinal (A) ; la turbine à gaz (5) comprenant une pluralité de capteurs de température (38) disposés circonférentiellement autour de l'axe longitudinal (A) ; le procédé comprenant :
• le fait de faire fonctionner la turbine à gaz (5) dans une plage de charge relative faible ;
• lorsque la turbine à gaz (5) fonctionne dans ladite plage de charge relative faible, le fait d'éteindre au moins un brûleur de la pluralité de brûleurs (12 ; 112) afin d'avoir un nombre minimal de brûleurs allumés en fonctionnement ;
• le calcul d'une valeur moyenne (TATAV) sur la base des valeurs de température mesurées par la pluralité de capteurs (38) ;
• la commande de l'ensemble de chambres de combustion (4 ; 104) sur la base d'au moins la valeur moyenne calculée (TATAV),
le procédé étant **caractérisé par le fait que** le calcul de la valeur moyenne (TATAV) comprend le calcul de la moyenne en prenant uniquement en compte les valeurs détectées par les capteurs de température (38) qui sont positionnés de manière à détecter la température des courants de fluide qui ont été sensiblement chauffés par les brûleurs allumés en fonctionnement (12 ; 112).

2. Procédé selon la revendication 1, dans lequel la commande de l'ensemble de chambres de combustion (4 ; 104) comprend la commande du fonctionnement de chacun des brûleurs allumés en fonctionnement (12 ; 112) et/ou la commande de la quantité de comburant fournie à l'ensemble de chambres de combustion (4 ; 104).

3. Procédé selon la revendication 2, dans lequel la commande de l'ensemble de chambres de combustion (4 ; 104) comprend le calcul d'une erreur (e) entre une valeur actuelle de la température à l'entrée (TIT) de la turbine à gaz (5) et une valeur souhaitée prédéfinie de la température à l'entrée (TITREF) et la commande de l'ensemble de chambres de combustion (4 ; 104) sur la base de ladite erreur (e).

4. Procédé selon la revendication 3, dans lequel la commande de l'ensemble de chambres de combustion (4 ; 104) comprend le calcul de la valeur actuelle de la température à l'entrée (TIT) sur la base de la valeur moyenne (TATAV).

5. Procédé selon l'une quelconque des revendications précédentes, dans lequel la pluralité de capteurs de température (38) sont disposés à la sortie de la turbine à gaz (5).

6. Procédé selon l'une quelconque des revendications 2 à 5, dans lequel la commande de la quantité de comburant fournie à l'ensemble de chambres de combustion (4 ; 104) comprend au moins l'une des étapes suivantes :
• régulation de la position d'une pluralité d'aubes de guidage d'entrée (14) disposées à l'entrée du compresseur (3) ;
• la régulation de l'ouverture d'au moins une soupape d'échappement (16) disposée le long d'une conduite d'extraction (15) qui aspire l'air du compresseur (3) et le fournit à la turbine à gaz (5) ;
• l'ouverture d'une conduite de dérivation (18) reliant le compresseur (3) à tout élément de l'installation (1 ; 100) disposé en aval de l'ensemble de chambres de combustion (4 ; 100) ;
• la régulation de l'ouverture d'au moins une soupape de recirculation (22) disposée le long d'une conduite de recirculation (21) reliant un étage intermédiaire du compresseur (3) à l'entrée du compresseur (3).

7. Installation de turbine à gaz (1 ; 100) s'étendant le long d'un axe longitudinal (A) et comprenant un compresseur (3), un ensemble de chambres de combustion (4 ; 104) et au moins une turbine à gaz (5) et un dispositif de commande (25 ; 125) ; l'ensemble de chambres de combustion (4; 104) comprenant au moins une chambre de combustion (11 ; 106) couplée à la turbine à gaz (5) et pourvue d'une pluralité de brûleurs (12 ; 12) disposés circonférentiellement autour de l'axe longitudinal (A) ; la turbine à gaz (5) comprenant une pluralité de capteurs de température (38) disposés circonférentiellement autour de l'axe longitudinal (A) ; le dispositif de commande (25 ; 125) étant configuré pour :
éteindre au moins un brûleur de la pluralité de brûleurs (12 ; 112) afin d'avoir un nombre minimal de brûleurs allumés en fonctionnement lorsque la turbine à gaz (5) fonctionne à la charge environnementale minimale ;
calculer (35) une valeur moyenne (TATAV) sur la base des valeurs de température mesurées par la pluralité de capteurs (38) ;
commander l'ensemble de chambres de combustion (4 ; 104) sur la base d'au moins la valeur moyenne calculée (TATAV) ;
l'installation étant **caractérisée par le fait que** le dispositif de commande (25 ; 125) est configuré pour calculer la valeur moyenne (TATAV) en calculant une moyenne en prenant uniquement en compte les valeurs détectées par les capteurs de température (38) qui sont positionnés de manière à détecter la température des courants de fluide qui ont été sensiblement chauffés par les brûleurs allumés en fonctionnement (12 ; 112).

8. Installation selon la revendication 7, dans laquelle le dispositif de commande (25; 125) est configuré pour commander le fonctionnement de chacun des brûleurs allumés en fonctionnement (12 ; 112) et/ou pour commander la quantité de comburant fournie à l'ensemble de chambres de combustion (4 ; 104).

9. Installation selon la revendication 8, dans laquelle le dispositif de commande (25 ; 125) est configuré pour calculer (30) une erreur (e) entre une valeur actuelle de la température à l'entrée (TIT) de la turbine à gaz (5) et une valeur souhaitée prédéfinie de la température à l'entrée (TITREF) et commander l'ensemble de chambres de combustion (4 ; 104) sur la base de ladite erreur (e).

10. Installation selon la revendication 9, dans laquelle le dispositif de commande (25 ; 125) est configuré pour calculer (34) la valeur actuelle de la température à l'entrée (TIT) sur la base de la valeur moyenne (TATAV).

11. Installation selon l'une quelconque des revendications 7 à 10, dans laquelle la pluralité de capteurs de température (38) sont disposés à la sortie de la turbine à gaz (5).

12. Installation selon l'une quelconque des revendications 8 à 11, dans laquelle le dispositif de commande (25 ; 125) est configuré pour réaliser au moins l'une des étapes suivantes :
• calculer un premier signal de commande (UIGV) pour réguler la position d'une pluralité d'aubes de guidage d'entrée (14) disposées à l'entrée du compresseur (3) ;
• calculer un deuxième signal de commande (UBO) pour réguler l'ouverture d'au moins une soupape d'échappement (16) disposée le long d'une conduite d'extraction (15) qui aspire l'air du compresseur (3) et le fournit à la turbine à gaz (5) ;
• calculer un troisième signal de commande (UBYP) pour commander l'ouverture d'une conduite de dérivation (18) reliant le compresseur (3) à tout élément de l'installation (1 ; 100) disposé en aval de l'ensemble de chambres de combustion (4 ; 100) ;
• calculer un quatrième signal de commande (UREC) pour réguler l'ouverture d'au moins une soupape de recirculation (22) disposée le long d'une conduite de recirculation (21) reliant un étage intermédiaire du compresseur (3) à l'entrée du compresseur (3).

13. Installation selon l'une quelconque des revendications 7 à 12, dans laquelle l'ensemble de chambres de combustion (104) est un ensemble de chambres combustion successives et comprend une première chambre de combustion (105) et une seconde chambre de combustion (106) disposée en aval de la première chambre de combustion (105) ; la seconde chambre de combustion (106) comprenant la pluralité de brûleurs (112) et étant couplée à la turbine à gaz (5).
